# EUROPEAN PATENT SPECIFICATION

(11) **EP 3 208 243 B1**
(45) Date of publication and mention of the grant of the patent: **08.04.2020**
(21) Application number: 16155896.0
(22) Date of filing: 16.02.2016
(51) Int. Cl.: C02F 9/00, C02F 1/22, C02F 1/32, C02F 1/78

(54) **UV-SYSTEM WITH A DEGASSING ZONE**
UV-SYSTEM MIT EINER ENTGASUNGSZONE
SYSTÈME UV AVEC UNE ZONE DE DÉGAZAGE

(43) Date of publication of application: 23.08.2017
(73) Proprietor: Xylem Europe GmbH, 8200 Schaffhausen (CH)
(72) Inventor: WIELAND, Arne, 32427 Minden (DE); RAND, Wiebke, 33824 Werther (DE)
(74) Representative: Lenzing Gerber Stute

(56) References cited:
- WO-A1-03/022749
- JP-A- H1 142 486
- US-A- 5 422 013
- US-A1- 2005 126 972

## Description

The present invention relates to a liquid treatment system comprising a degassing zone and a treatment zone with an ultra-violet (UV) radiation source as defined in claim 1.

A system of this type is known from US Patent 8,148,699 B2.

Generally, these systems are called "fluid treatment systems" because they work for gases, liquids, suspensions and the like. Throughout this patent application, the term "liquid treatment system" is used because the medium to be treated shall be essentially free of gaseous components which might interfere with the intended purpose. In this sense, a liquid should be understood as a flowing medium, which may contain different liquid phases and suspended solid particles, but no significant amount of gas.

The known liquid treatment system, like other similar systems, comprises a closed channel or housing, in which a number of UV radiators are arranged. The exact way how the radiators are oriented in the channel is not relevant in the present context.

Such closed channel systems are used to treat drinking water or wastewater. They are attached to a pipe which feeds the water to be treated into an inlet. The cross-section at the inlet is generally circular. From the circular inlet, there is a transition region which has a conical shape and leads the circular inlet to a rectangular conduit of larger cross-section. This means that the flow of water is enlarged in cross-section and therefore the velocity of the flow is reduced. Downstream of the transition section, there is the reactor housing itself, which is of essentially rectangular or quadratic cross-section, with minor deviations due to manufacturing requirements, attachments, fitting and the like. This section also houses the radiators. Downstream of the treatment zone, the water flow, which is now treated with a certain dose of ultraviolet radiation, leaves the treatment zone and enters a second transition zone in which the quadratic cross-section of the treatment zone is transformed to a circular cross-section of smaller diameter for attachment to an outflow pipe.

Reactors of the known type cannot only be used for disinfection purposes, but also for so called advanced oxidation processes. Contamination with organic substances are increasingly recognized as harmful to health, so that their removal is necessary. On the other hand more and more such substances are detected in the groundwater and surface water. An example of this is the increasing concentration of pharma ceutical residues in surface waters. Such contamination can be reduced by various technologies like adsorption, oxidation or UV irradiation of organic contaminants. The advanced oxidation process is the most beneficial one uses the combination of strong oxidant like hydrogen peroxide and gaseous ozone to produce hydroxyl radicals which are then capable of cracking the molecule into shorter parts. These shorter parts then can be further degraded by ultraviolet radiation where residuals of the oxidations are forming hydroxyl radicals as well.

US 5 422 013 A discloses a degassing zone arranged before the treatment zone, wherein the deaerator has plural micro pipes composed of micro-pored films to eliminate DO in such a manner that the water-to-be-treated flows in the micro pipes and the micro pipes are degasified from outside.

One problem with combined advanced oxidation processes with ozone, hydrogen peroxide and UV, if they are carried out in larger systems, are the gas bubbles. These bubbles are created during the ozone step and have to be removed from the system. Gas bubbles have a negative impact on the performance UV-system because the UV-transmission and accordingly the adsorption of UV-light is significantly reduced.

It is therefore an object of the present invention to provide a liquid treatment system, which is effective in AOP processes, which can be used in large-scale installations and which has no negative impact on the performance of the UV-system.

The subject is achieved by a system with the features of claim 1.

In a liquid treatment system with an inlet and an outlet defining a liquid flow direction from the inlet to the outlet, a liquid treatment zone arranged between the inlet and the outlet, the liquid treatment zone comprising a number of ultraviolet radiators arranged to radiate ultraviolet radiation into a liquid flowing through the treatment zone, a first transition zone downstream of the inlet and a second transition zone upstream of the outlet, which adapt the cross section of the inlet to the cross section of the treatment zone, and the cross section of the treatment zone to the cross section of the outlet, respectively,
wherein the inlet, the transition zones, the treatment zone and the outlet confine the liquid flow in a closed channel, greater durability of the radiators and the channel wall material is achieved by providing a degassing zone at the top of the channel between the inlet and the treatment zone for separating undissolved gas from the liquid and removing the separated gas from the system. The degassing zone is provided between the first transition zone and the treatment zone, because in this degassing zone, the flow rate can be decreased and thus degassing effectively supported. The degassing zone is of essentially the same shape and cross section as the treatment zone, and that no ultraviolet radiators are provided in the degassing zone. This arrangement makes the construction less complex. A degassing device is arranged at the end of the degassing zone to communicate with the degassing zone with the advantage that the gas can be handled by the degassing device. The degassing device is located at the upper edge of the system.The treatment zone and the degassing zone are of essentially rectangular cross section with longitudinal edges and that, relative to a horizontal plane, the edges are oriented essentially horizontally, namely with inclination angles between -10 degrees to +10 degrees relative to a horizontal plane, and one upper edge is located at the top of the system. This way, the gas can be collected under the top edge of the channel. The terms "top" and horizontal" are defined with respect to the direction of gravitation, which is assumed as acting in a vertical direction, because it is the influence of gravitation that lets the undissolved gas bubbles rise to the top of the fluid. Degassing is effectively carried out, because the degassing zone comprises a baffle plate which is arranged at the top edge of the degassing zone upstream of the treatment zone and downstream of the degassing device. The degassing device is dome-shaped and comprises an internal volume for collection of the gas, which is released from the liquid prior to the venting of the gas. This feature makes the device compact and effective. Further, the first transtion zone transforms the circular cross section of the closed inlet to a rectangular or quadratic cross-section of larger dimension, thus enlarging the cross-section of the flow and reducing the flow velocity and the second transition zone reduces the cross-section of the degassing and the treatment zone to a smaller circular cross section of the outlet.

The length of the degassing zone, in the direction of the flow, may be 10% to 50% of the length of the treatment zone. In a preferred embodiment the length of the degassing zone may be 20% to 30% of the length of the treatment zone.

It is an advantage when the degassing zone comprises side wall means and top wall means which are adapted to hold a gas volume which is separated from and located above the flow of liquid, because these wall means can confine a volume of gaseous phase above the liquid. In the case of gases which contain a proportion of ozone, this helps to prevent the uncontrolled release of ozone to the atmosphere.

While the degassing zone is provided to collect undissolved gas, the degassing device is provided to remove this gas from the system. This is achieved in a preferred manner if the degassing device has an inlet, which is open to the gas volume and adapted to convey gas from the degassing zone into venting means for guiding the gas out of the system.

In a preferred embodiment an ozone mixing device for mixing gaseous ozone enriched gas into the liquid is provided upstream of the degassing zone, so that advanced oxidation processes (AOP) can be carried out in the system.

The baffle plate may advantageously be fitted to the walls of the degassing zone in a way that gas collected upstream of the baffle plate along the upper edge of the degassing zone is prevented from entering the treatment zone.

To remove the gas, it is preferred that the degassing device comprises an opening for venting of the collected gas from the degassing zone. In a further preferred embodiment, the opening is closable, depending on the signal of an electronic controller. This enables the system to collect gas over a certain time, if desired, and vent gas at controlled times, after a certain volume is collected, or in intervals.

The degassing device may preferably comprise a degassing valve, which may be operated automatically in order to vent collected gas from the degassing zone.

It is preferred that the valve communicates with an ozone-degrading device for destructing any remaining ozone in the vented gas. In the case of AOP procedures being carried out in the system, the release of ozone to the atmosphere can be prevented.

In the following, a preferred embodiment of the present invention is described with respect to other figures. The figures show:
- Figure 1:: a schematic representation of an advance oxidation process;
- Figure 2:: a reactor according to the present invention in a side elevation, in schematic representation;
- Figure 3:: a cross-section through the degassing zone of the reactor of figure 2; and
- Figure 4:: a reactor with inlet and outlet in a perspective representation.

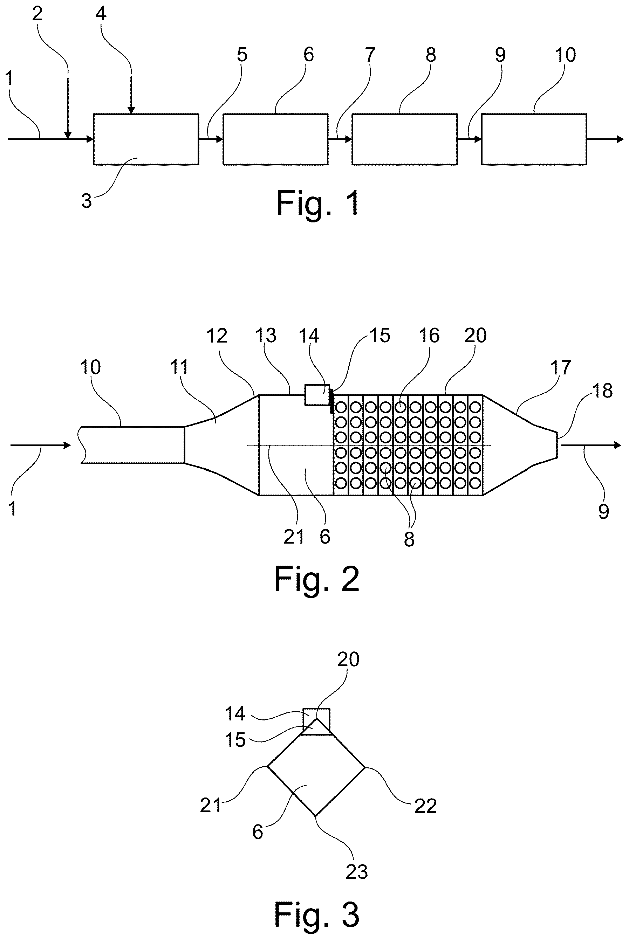

Figure 1 shows the steps of an AOP process for treating raw water, which may be effluent from a waste dump side, contaminated ground water or similar water that needs to be treated for persistent chemicals like endocrine substances. The pre-treated raw water 1 may be contacted with hydrogen peroxide 2 in a first step. This step is an option. The raw water 1 is then fed into an ozone mixing and reaction system 3, in which the raw water 1 is contacted with ozone 4, namely an ozone containing gas like oxygen with an ozone content up to 20%, or with air which is enriched in ozone by a known process. The ozone 4 will then be dissolved in the raw water stream, depending on the efficiency of the ozone mixing system. There will inevitably be some gaseous ozone or other gaseous components remaining un-dissolved in the raw water at an outlet 5 of the ozone mixing and reaction system 3. The dissolved ozone, however, is reacting with the contamination at this point.

After that, a degassing zone 6 for the ozone containing gas is provided. This degassing zone is intended to remove the non-dissolved gas from the water stream. At the outlet of the degassing zone 6, the pre-treated raw water 7 is essentially free of non-dissolved gas. At this point, a UV system with UV radiators 8 is entered and the pre-treated water stream 7 is subject to an irradiation with ultraviolet rays of a certain dose. At the outlet 9, the treated water stream contains significantly less persistent chemical components, which have been degraded by the AOP process as briefly described above. Optionally, further filtration steps 19 may follow the AOP process.

A UV treatment system according to the present invention is shown in a schematic side elevation in figure 2. The pre-treated raw water 1 enters the system through an inlet 10 of circular cross-section. A transition zone 11 is attached to the inlet, which transforms the cross-section of the closed inlet channel from circular cross-section to a rectangular or quadratic cross-section of larger dimensions, thus enlarging the cross-section of the flow and reducing the flow velocity. At the end 12 of the transition zone 11, the flow velocity is significantly reduced, which allows un-dissolved gas, which is present as bubbles, to rise to the top of the installation. The transition zone 11 is followed by a degassing zone 13, which has the same enlarged rectangular cross-section as the end 12 of the transition zone 11. In the degassing zone 13, the gas bubbles, which are still present in the raw water 1, rise to the top of the installation. A degassing device in the form of a dome 14 is provided to collect the gas at the end of the degassing zone 13, and a vent valve (not shown) may be provide to vent any collected gas from the dome 14. A separation plate 15 is provided downstream of the dome 14, which separation plate 15 represents the end of the degassing zone and prevents any gas bubbles which are collected at the top of the degassing zone from entering the following irradiation zone or treatment zone 16, in which the pre-treated raw water, which is now contacted with dissolved ozone, will be purified. Downstream of the treatment zone 16, a second transition zone 17 is provided in order to reduce the cross-section of the system from the cross-section of the degassing zone and the treatment zone to the smaller, circular cross-section of an outlet 18, which feeds the treated raw water 9 into further pipe systems and optionally into further filtration steps.

A cross-section of the degassing zone at the point where the dome 14 and the baffle plate 15 are provided is shown in figure 3. As can be seen in figure 3, the orientation of the cross-section of the degassing zone, and of the following treatment zone, which is not visible here, is such that the cross-section is quadratic with four edges. In a preferred embodiment, the housing of the system is set up such that one edge 20 is at the top of the system, so that any collected gas can be concentrated along that edge. Consequently, there are other edges 21 (which is already visible in figure 2), 22 and 23, wherein the edges 21 and 22 side edges, while edge 23 is a bottom edge. The orientation of the cross-section and the housing of the degassing zone 6 and the treatment zone 8 therefore promote the removal of the gas contained in the pre-treated raw water downstream of the ozone mixing and reaction system 3.

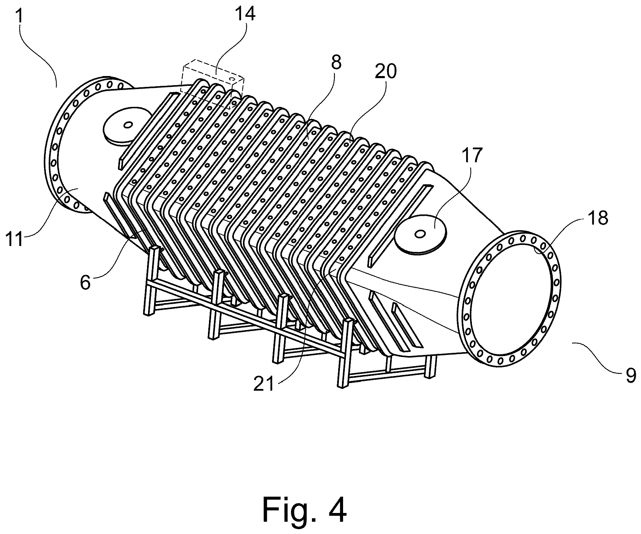

Figure 4 finally shows a perspective representation of the system as described above. It can be understood that the orientation of the cross-section of the degassing zone 6 and the treatment zone 8 facilitate the collection of undissolved gas along the upper edge 20 of the device.

## Claims

1. Liquid treatment system comprising
an inlet (10) and an outlet (18) defining a liquid flow direction from the inlet (10) to the outlet (18),
a liquid treatment zone (16) arranged between the inlet (10) and the outlet (18), the liquid treatment zone (16) comprising a number of ultraviolet radiators (8) arranged to radiate ultraviolet radiation into a liquid flowing through the treatment zone (16),
a first transition zone (11) downstream of the inlet (10) and a second transition zone (17) upstream of the outlet (18), which adapt the cross section of the inlet (10) to the cross section of the treatment zone (16), and the cross section of the treatment zone (16) to the cross section of the outlet (18), respectively, wherein the inlet (10), the transition zones (11, 17), the treatment zone (16) and the outlet (18) confine the liquid flow in a closed channel,
**characterized in that**
a degassing zone (13) is provided between the inlet (10) and the treatment zone (16) at the top of the channel;
the degassing zone (13) is provided between the first transition zone (11) and the treatment zone (16);
the degassing zone (13) is of essentially the same shape and cross section as the treatment zone (16), and that no ultraviolet radiators are provided in the degassing zone (13);
a degassing device (14) is provided at the end of the degassing zone and arranged to communicate with the degassing zone (13);
the treatment zone (16) and the degassing zone (13) are of essentially rectangular cross section with longitudinal edges (20, 21, 22, 23) and that, relative to a horizontal plane, the edges (20, 21, 22, 23) are essentially horizontally oriented, that is at angles between +10 degrees and -10 degrees against the horizontal plane, and that one upper edge (20) is located at the top of the system;
the degassing device (14) is located at the upper edge of the system;
the degassing zone (13) comprises a baffle plate (15) which is arranged at the top of the degassing zone (13) upstream of the treatment zone (16) and downstream of the degassing device (14);
the degassing device (14) is dome-shaped and comprises an internal volume for collection of the gas which is released from the liquid prior to the venting of the gas;
the first transition zone (11) transforms the circular cross section of the closed inlet (10) to a rectangular or quadratic cross-section of larger dimension, thus enlarging the cross-section of the flow and reducing the flow velocity; and
the second transition zone (17) reduces the cross-section of the degassing (13) and the treatment zone (16) to a smaller circular cross section of the outlet (18).

2. Liquid treatment system according to claim 1, **characterized in that** the degassing zone (13) comprises side wall means and top wall means which are adapted to hold a gas volume which is separated from and located above the flow of liquid.

3. Liquid treatment system according to claim 1 or 2, **characterized in that** the degassing device (14) has an inlet which is open to the gas volume and adapted to convey gas from the degassing zone into venting means for guiding the gas out of the system.

4. Liquid treatment system according to one of the preceding claims, **characterized in that** an ozone mixing device (3) for mixing gaseous ozone enriched gas into the liquid is provided upstream of the degassing zone (13).

5. Liquid treatment system according to one of the preceding claims, **characterized in that** the baffle plate (15) is fitted to the walls of the degassing zone (13) such that gas collected upstream of the baffle plate (15) along the top of the degassing zone (13) is prevented from entering the treatment zone (16).

6. Liquid treatment system according to one of the preceding claims, **characterized in that** the degassing device (14) comprises an opening for venting of the collected gas from the degassing zone (13).

7. Liquid treatment system according to claim 6, **characterized in that** the opening is closable, depending on the signal of an electronic controller.

8. Liquid treatment system according to one of the preceding claims, **characterized in that** the degassing device (14) comprises a degassing valve, which may be operated automatically in order to vent collected gas from the degassing zone (13).

9. Liquid treatment system according to claim 8, **characterized in that** the degassing valve communicates with an ozone-degrading device for destructing any remaining ozone in the vented gas.

## Patentansprüche

1. Flüssigkeitsbehandlungssystem, umfassend einen Einlass (10) und einen Auslass (18), die eine Flüssigkeitsströmungsrichtung von dem Einlass (10) zu dem Auslass (18) definieren,
eine Flüssigkeitsbehandlungszone (16), die zwischen dem Einlass (10) und dem Auslass (18) angeordnet ist, wobei die Flüssigkeitsbehandlungszone (16) eine Anzahl von UV-Strahlern (8) umfasst, die angeordnet sind, um ultraviolette Strahlung in eine Flüssigkeit zu strahlen, die durch die Behandlungszone (16) strömt, eine erste Übergangszone (11) stromabwärts des Einlasses (10) und eine zweite Übergangszone (17) stromaufwärts des Auslasses (18), die den Querschnitt des Einlasses (10) an den Querschnitt der Behandlungszone (16) anpasst, bzw. den Querschnitt der Behandlungszone (16) an den Querschnitt des Auslasses (18) anpasst, wobei der Einlass (10), die Übergangszonen (11, 17), die Behandlungszone (16) und der Auslass (18) die Flüssigkeitsströmung in einem geschlossenen Kanal eindämmen,
**dadurch gekennzeichnet, dass**
eine Entgasungszone (13) zwischen dem Einlass (10) und der Behandlungszone (16) an der Oberseite des Kanals vorgesehen ist;
die Entgasungszone (13) zwischen der ersten Übergangszone (11) und der Behandlungszone (16) vorgesehen ist;
die Entgasungszone (13) im Wesentlichen dieselbe Form und Querschnitt aufweist wie die Behandlungszone (16), und dass keine UV-Strahler in der Entgasungszone (13) vorgesehen sind;
eine Entgasungsvorrichtung (14) an dem Ende der Entgasungszone vorgesehen ist und so angeordnet ist, dass sie mit der Entgasungszone (13) kommuniziert;
die Behandlungszone (16) und die Entgasungszone (13) von im wesentlichen rechteckigen Querschnitt mit Längskanten (20, 21, 22, 23) sind, und dass, relativ zu einer horizontalen Ebene, die Kanten (20, 21, 22, 23) im Wesentlichen horizontal ausgerichtet sind, d. h. in Winkeln zwischen +10 Grad und -10 Grad gegen die horizontale Ebene, und dass sich eine obere Kante (20) an der Oberseite des Systems befindet;
die Entgasungsvorrichtung (14) sich an der oberen Kante des Systems befindet;
die Entgasungszone (13) eine Prallplatte (15) umfasst, die an der Oberseite der die Entgasungszone (13) stromaufwärts der Behandlungszone (16) und stromabwärts der Entgasungsvorrichtung (14) angeordnet ist;
die Entgasungsvorrichtung (14) kuppelförmig ist und ein internes Volumen zur Sammlung von dem Gas umfasst, das aus der Flüssigkeit vor der Entlüftung des Gases freigesetzt wird;
die erste Übergangszone (11) den kreisförmigen Querschnitt des geschlossenen Einlasses (10) in einen rechteckigen oder quadratischen Querschnitt der größeren Dimension umwandelt, und damit den Strömungsquerschnitt erhöht und die Strömungsgeschwindigkeit verringert; und
die zweite Übergangszone (17) den Entgasungsquerschnitt (13) und die Behandlungszone (16) auf einen kleineren kreisförmigen Querschnitt des Auslasses (18) verringert.

2. Flüssigkeitsbehandlungssystem nach Anspruch 1, **dadurch gekennzeichnet, dass** die Entgasungszone (13) Seitenwandmittel und obere Wandmittel aufweist, welche angepasst sind, um ein Gasvolumen zu halten, das von einem Flüssigkeitsstrom getrennt wird und oberhalb dessen angeordnet ist.

3. Flüssigkeitsbehandlungssystem nach Anspruch 1 oder 2, **dadurch gekennzeichnet, dass** die Entgasungsvorrichtung (14) einen Einlass aufweist, der zu dem Gasvolumen offen ist und angepasst ist, um Gas von der Entgasungszone in Entlüftungsmittel zu übertragen, um das Gas aus dem System zu leiten.

4. Flüssigkeitsbehandlungssystem nach einem der vorhergehenden Ansprüche, **dadurch gekennzeichnet, dass** eine Ozonmischvorrichtung (3) zum Mischen von mit gasförmigem Ozon angereichertem Gas in die Flüssigkeit stromaufwärts der Entgasungszone (13) vorgesehen ist.

5. Flüssigkeitsbehandlungssystem nach einem der vorstehenden Ansprüche, **dadurch gekennzeichnet, dass** die Prallplatte (15) an den Wänden der Entgasungszone (13) eingepasst ist, so dass Gas, das stromaufwärts der Prallplatte (15) entlang der Oberseite der Entgasungszone (13) gesammelt wird, daran gehindert wird, in die Behandlungszone (16) einzudringen.

6. Flüssigkeitsbehandlungssystem nach einem der vorstehenden Ansprüche, **dadurch gekennzeichnet, dass** die Entgasungsvorrichtung (14) eine Öffnung zum Entgasen des gesammelten Gases aus der Entgasungszone (13) umfasst.

7. Flüssigkeitsbehandlungssystem nach Anspruch 6, **dadurch gekennzeichnet, dass** die Öffnung je auf dem Signal von einer elektronischen Steuerung verschließbar ist.

8. Flüssigkeitsbehandlungssystem nach einem der vorhergehenden Ansprüche, **dadurch gekennzeichnet, dass** die Entgasungsvorrichtung (14) ein Entgasungsventil umfasst, das automatisch betrieben werden kann, um gesammeltes Gas aus der Entgasungszone (13) zu entlüften.

9. Flüssigkeitsbehandlungssystem nach Anspruch 8, **dadurch gekennzeichnet, dass** das Entgasungsventil in Verbindung mit einer ozonabbauenden Vorrichtung zur Zerstörung von etwaigem verbleibendem Ozon in dem entlüfteten Gas steht.

## Revendications

1. Système de traitement de liquide comprenant
une admission (10) et une sortie (18) définissant un sens d'écoulement de liquide de l'admission (10) à la sortie (18),
une zone de traitement de liquide (16) disposée entre l'admission (10) et la sortie (18), la zone de traitement de liquide (16) comprenant un certain nombre de dispositifs de rayonnement ultraviolet (8) servant à diffuser un rayonnement ultraviolet dans un liquide s'écoulant dans la zone de traitement (16),
une première zone de transition (11) en aval de l'admission (10) et une seconde zone de transition (17) en amont de la sortie (18), qui adaptent respectivement la section transversale de l'admission (10) à la section transversale de la zone de traitement (16), et la section transversale de la zone de traitement (16) à la section transversale de la sortie (18), dans lequel l'admission (10), les zones de transition (11, 17), la zone de traitement (16) et la sortie (18) confinent l'écoulement de liquide dans un canal fermé,
**caractérisé en ce que**
une zone de dégazage (13) est disposée entre l'admission (10) et la zone de traitement (16) au niveau de la partie supérieure du canal ;
la zone de dégazage (13) est disposée entre la première zone de transition (11) et la zone de traitement (16) ;
la zone de dégazage (13) présente essentiellement les mêmes forme et section transversale que la zone de traitement (16), et aucun dispositif de rayonnement ultraviolet n'est disposé dans la zone de dégazage (13) ;
un dispositif de dégazage (14) est disposé à l'extrémité de la zone de dégazage et sert à communiquer avec la zone de dégazage (13) ;
la zone de traitement (16) et la zone de dégazage (13) présentent une section transversale essentiellement rectangulaire avec des bords longitudinaux (20, 21, 22, 23) et, par rapport à un plan horizontal, les bords (20, 21, 22, 23) sont orientés essentiellement à l'horizontale, c.-à-d. à des angles compris entre +10 et -10 degrés par rapport au plan horizontal, et un bord supérieur (20) se trouve au niveau de la partie supérieure du système ;
le dispositif de dégazage (14) se trouve au niveau du bord supérieur du système ;
la zone de dégazage (13) comprend un déflecteur (15) disposé au niveau de la partie supérieure de la zone de dégazage (13) en amont de la zone de traitement (16) et en aval du dispositif de dégazage (14) ;
le dispositif de dégazage (14) présente une forme de dôme et comprend un volume interne permettant la collecte du gaz libéré du liquide avant d'éventer le gaz ;
la première zone de transition (11) transforme la section transversale circulaire de l'admission fermée (10) en une section transversale rectangulaire ou quadratique aux dimensions plus grandes, ce qui élargit la section transversale de l'écoulement et réduit la vitesse d'écoulement ; et
la seconde zone de transition (17) réduit la section transversale de la zone de dégazage (13) et de traitement (16) en une section transversale circulaire plus petite de la sortie (18).

2. Système de traitement de liquide selon la revendication 1, **caractérisé en ce que** la zone de dégazage (13) comprend un moyen formant paroi latérale et un moyen formant paroi supérieure, qui sont conçus pour contenir un volume de gaz qui est séparé de l'écoulement de liquide et se trouve au-dessus de celui-ci.

3. Système de traitement de liquide selon la revendication 1 ou 2, **caractérisé en ce que** le dispositif de dégazage (14) comporte une admission qui s'ouvre sur le volume de gaz et est conçue pour transporter le gaz de la zone de dégazage dans un moyen formant évent permettant de guider le gaz hors du système.

4. Système de traitement de liquide selon l'une quelconque des revendications précédentes, **caractérisé en ce qu'**un dispositif de mélange d'ozone (3) permettant de mélanger un gaz enrichi en ozone gazeux dans le liquide est prévu en amont de la zone de dégazage (13).

5. Système de traitement de liquide selon l'une quelconque des revendications précédentes, **caractérisé en ce que** le déflecteur (15) est installé sur les parois de la zone de dégazage (13) de façon à empêcher le gaz collecté en amont du déflecteur (15) le long de la partie supérieure de la zone de dégazage (13) de pénétrer dans la zone de traitement (16).

6. Système de traitement de liquide selon l'une quelconque des revendications précédentes, **caractérisé en ce que** le dispositif de dégazage (14) comprend une ouverture permettant d'éventer le gaz collecté de la zone de dégazage (13).

7. Système de traitement de liquide selon la revendication 6, **caractérisé en ce que** l'ouverture peut être fermée en fonction du signal d'un dispositif de commande électronique.

8. Système de traitement de liquide selon l'une quelconque des revendications précédentes, **caractérisé en ce que** le dispositif de dégazage (14) comprend une soupape de dégazage pouvant fonctionner automatiquement afin d'éventer le gaz collecté de la zone de dégazage (13).

9. Système de traitement de liquide selon la revendication 8, **caractérisé en ce que** la soupape de dégazage communique avec un dispositif de dégradation d'ozone permettant de détruire l'ozone restant dans le gaz éventé.
